Europäisches Patentamt

European Patent Office

Office européen des brevets

(11) Veröffentlichungsnummer: **0 279 045**
**A2**

# EUROPÄISCHE PATENTANMELDUNG

(21) Anmeldenummer: 87118023.8

(51) Int. Cl.⁴: **H01H 3/30** , H02B 13/04

(22) Anmeldetag: 05.12.87

(30) Priorität: 17.01.87 DE 3701216

(43) Veröffentlichungstag der Anmeldung:
**24.08.88 Patentblatt 88/34**

(84) Benannte Vertragsstaaten:
**AT BE CH DE ES FR GB GR IT LI NL SE**

(71) Anmelder: **Sachsenwerk Aktiengesellschaft**
**Einhauser Strasse 9**
**D-8400 Regensburg 1(DE)**

(72) Erfinder: **Stegmüller, Karl, Dipl.-Ing. (FH)**
**Galgenberg-West 11**
**D-8401 Wiesent(DE)**

(54) **Universalantrieb.**

(57) Der Universalantrieb nach der vorliegenden Erfindung ist als selbständiges Gerät ausgelegt, das in zwei verschiedenen, von einander deutlich unterscheidbaren Anbauarten zur Betätigung von Dreistellungsschaltern eingesetzt werden kann. In der einen Anbauart (Schalter I und II) dient der Antrieb als Sprung-oder Speicherantrieb zum Ein- und Ausschalten einer Einspeisung oder eines Abzweigs, in der anderen (Schalter III) zu deren Erdung. Das Gehäuse (8) wird jeweils fest mit der Kapselung (23) des zu betätigenden Schalters verbunden, wobei der eigentliche Schaltvorgang mittels eines aufsteckbaren Schalthebels (22) durchgeführt wird. Der Universalantrieb ist auch für den Einsatz in ferngesteuerten Stationen erweiterbar.

Figur 7

EP 0 279 045 A2

## Universalantrieb

Die Erfindung betrifft einen Universalantrieb nach dem Oberbegriff des ersten Patentanspruches.

Ein derartiger Antrieb für die Drehschalter von elektrischen Verteileranlagen ist nach DE-AS 20 49 736 bekannt geworden. Das Gehäuse des Antriebs ist mit einer Handhabe fest verbunden und wird beim Spannen der Antriebsfeder als Ganzes um die stillstehende Antriebswelle bis zum Totpunkt verschwenkt. Der Antrieb kann von beiden Seiten angebaut werden, wobei er an der Frontplatte des jeweils zu bedienenden Schaltfeldes durch Raststifte festgelegt ist, die an im Gehäuse eingebauten und gegen dieses drehbar angebrachten Scheiben befestigt sind. Die Raststifte durchdringen das Gehäuse beidseitig durch kreisbogenförmige, die Schwenkbewegung desselben begrenzenden Schlitze, durch die Staub und andere Vrunreinigungen eindringen können. Bei der Spannbewegung wird der eine an einem Bolzen im Gehäuse angelenkte Auflagepunkt der Antriebsfeder mit verschwenkt.

Die an die Spannbewegung anschließende Schaltbewegung des Schalters erfolgt nach Überschreitung des Totpunktes bei stillstehendem Gehäuse in entgegengesetzter Drehrichtung, was die Bedienungssicherheit mindert. Die bei der Schaltbewegung mitdrehenden, auf der vom Schalter abgekehrten Seite befindlichen Kupplungsteile ragen dabei ungeschützt in den Bedienungsraum und bilden so eine erhebliche Unfallgefahr. Die Antriebsfeder äußert nach Abschluß der Schaltbewegung auf Grund von Eigenschwingungen über den Handgriff einen nicht erwünschten Schlag auf die Hand des Bedienenden. Beim Ansetzen des bekannten Antriebs an einem Schalter hängt die zu kuppelnde Seite von den jeweiligen Stellungen von Antrieb und Schalter ab, so daß eine eindeutige, zweifelsfreie Zuordnung einer Antriebsseite zu der zu betätigenden Schalterart nicht gegeben ist. Der Antrieb ist daher auch mangels notwendiger Sicherheit vor Fehlbedienungen für die Anwendung bei Dreistellungsschaltern nicht geeignet. Der grundsätzliche Aufbau des bekannten Antriebs gestattet auch keine Abwandlungen oder Erweiterungen, die ihn für Fremdauslösung, z.B. durch HH-Sicherungen oder Elektromagnetauslöser oder für Fernsteuerung durch einen Motorantrieb geeignet machen.

Der Erfindung liegt die Aufgabe zugrunde, einen Antrieb nach dem Oberbegriff des Patentanspruchs 1 so zu gestalten, daß er bei höchstmöglicher Bedienungssicherheit und geringster Unfallgefahr als Sprung-oder Speicherantrieb wahlweise für alle Schalter einer Schaltanlage eingesetzt werden kann.

Die Aufgabe wird erfindungsgemäß dadurch gelöst, daß
-der Antrieb zum Anbau an einen Dreistellungsschalter ausgebildet ist,
- der Antrieb Kupplungsmittel aufweist, mit denen er auf der einen Seite zur Betätigung als Lastschalter und auf der anderen Seite zur Betätigung als Erdungsschalter an den Dreistellungsschalter anbaubar ist,
- das allseitig geschlossene Gehäuse des Antriebs mit der Kapselung des zu betätigenden Dreistellungsschalters fest verbindbar ist, und
- die Antriebsfeder durch einen auf der dem Dreistellungsschalter jeweils abgekehrten Seite der Antriebswelle aufsteckbaren Spannhebel spannbar ist.

Da der neuartige Universalantrieb in einem geschlossenen Gehäuse alle Funktionsteile enthält und dabei in den zwei unverwechselbaren Anbauarten fest an der Kapselung des zu betätigenden Schalters angebracht und mit einem aufsteckbaren Spannhebel betätigt werden kann, besteht für das Personal keine Notwendigkeit, sich auf eine neue, vom Herkömmlichen abweichende Bedienungsweise umzustellen. Fehlbedienungen des Dreistellungsschalters werden dabei durch die beiden für die Last-und Erdungsschalterfunktion, z.B. durch Farbgebung oder Beschriftung deutlich, unterscheidbaren, beidseitigen Anbauarten vermieden. Durch einen Reversierhub bei vorgespannter Antriebsfeder, der im nicht gekuppelten Zustand des Antriebs vorzunehmen ist, wird in vorteilhafter Weise die Durchführung einer bestimmten Schalthandlung, z.B. der Erdung eines Abzweigs, nacheinander bei zwei oder mehreren Schaltern ermöglicht, ohne daß dabei die Anbauart des Antriebs und seine Bedienungsweise unterschiedlich sind.

Während der Antrieb in seiner einfachsten Ausführung als Sprungantrieb einsetzbar ist, läßt sich lediglich durch Hinzufügung eines willkürlich auslösbaren Sperrgliedes, z.B. einer Auslösewelle, das die Antriebsfeder in der gespannten Stellung sperrt, als zweite Ausführungsform ein Speicherantrieb schaffen.

Um notwendige Umschaltungen der Lastschalter, z.B. zur Fehlereingrenzung in einem gestörten Netzteil auch ohne den Einsatz von Bedienungspersonal vor Ort durchführen zu können, werden Lastschalteranlagen, vor allem in Netzstationen, auch ferngesteuert. Der neue Antrieb gestattet dazu nach weiteren Merkmalen der Erfindung in einfacher Weise eine Ergänzung durch elektromagnetische Auslöser sowie durch einen Motorantrieb mit Steuerkontakten.

Aus der DE-OS 29 32 355 ist zwar ein Speicherantrieb bekannt, der ebenfalls auf die Welle eines Schalters aufgesteckt werden kann. Beim Spannen der Antriebsfeder wird aber ein Teil des Antriebsgehäuses mit dem Betätigungsgriff um die Welle verdreht und mittels eines Feststellzapfens am Wellengehäuse arretiert.

Die Ein-oder Ausschaltung erfolgt dann nach der Freigabe einer außerhalb des Antriebs in jedem Schalter vorgesehenen Drehsperre der Schalterwelle. Eine Übertragung dieses Speicherantriebes auf einen Universalantrieb gemäß Oberbegriff 1 ist nicht möglich.

Weitere zweckmäßige Ausführungsmerkmale der Erfindung sind den Unteransprüchen zu entnehmen.

Die Einzelheiten der Erfindung werden in den folgenden Figuren beispielhaft näher erläutert. Es zeigt:

Fig. 1 Funktionsschema des Antriebs.

Fig. 2 Querschnitt zu Fig. 1 mit Kupplung an Schalterwelle und angestecktem Schalthebel.

Fig. 3 Antrieb während Reversionshub.

Fig. 4 Ansicht von Gehäuse bei Antrieb für Lastschalter.

Fig. 5 Draufsicht zu Fig. 4.

Fig. 6 Schaltstellungen des Dreistellungsschalters.

Fig. 7 Verschiedene Anbauarten des Antriebs, dargestellt an einer dreifeldigen Schaltanlage.

Fig. 8 Umsetzen des Antriebs.

Fig. 9a Ansicht bei aufgestecktem Schalthebel für die Betätigung als Lastschalter, Stellung EIN.

Fig. 9b Schnitt in Höhe der Kupplungsscheibe 14 b zu Fig. 9 a.

Fig.10a Ansicht bei aufgestecktem Schalthebel für die Betätigung als Erdungsschalter, Stellung geerdet.

Fig.10b Schnitt in Höhe der Kupplungsscheibe 14 a zu Fig. 10 a.

Fig. 11 Eingebaute Auslösewelle, Schalter in Ausschaltbereitstellung.

Fig.12 Eingebaute Auslösewelle, Schalter in "AUS"-Stellung.

Fig.13 Angebaute Anschläge für die Schalterbewegung.

Fig.14 Draufsicht zu Fig. 13

Fig.15 Universalantrieb mit Getriebmotor.

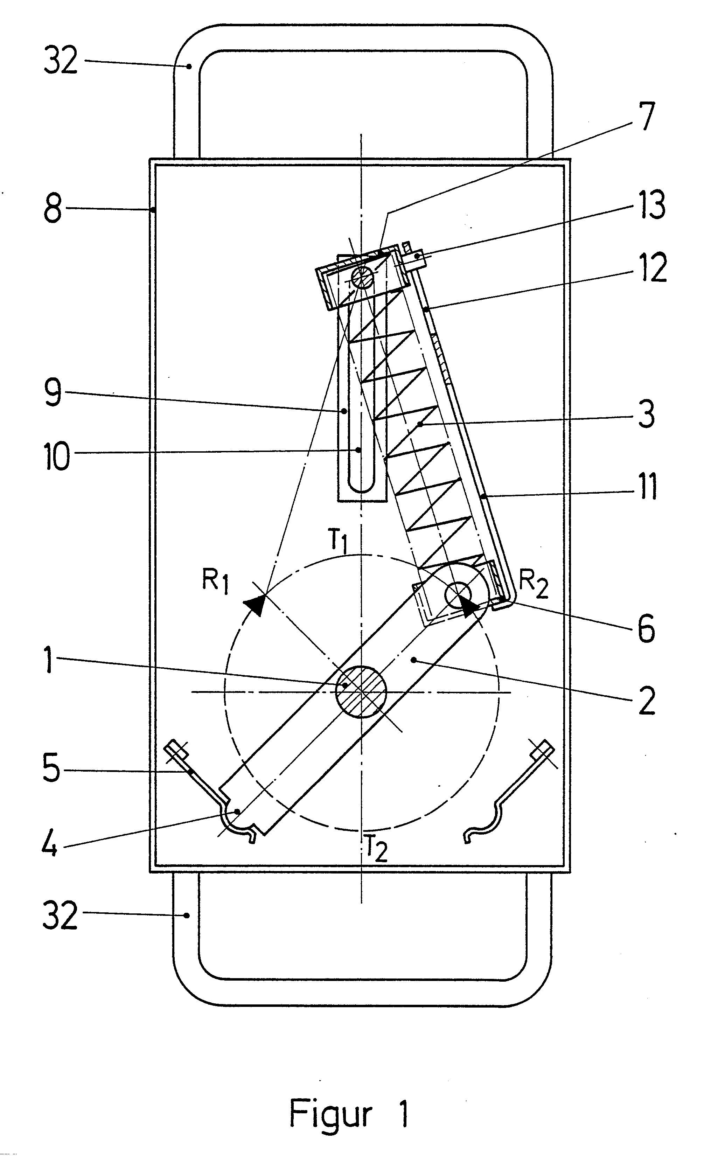

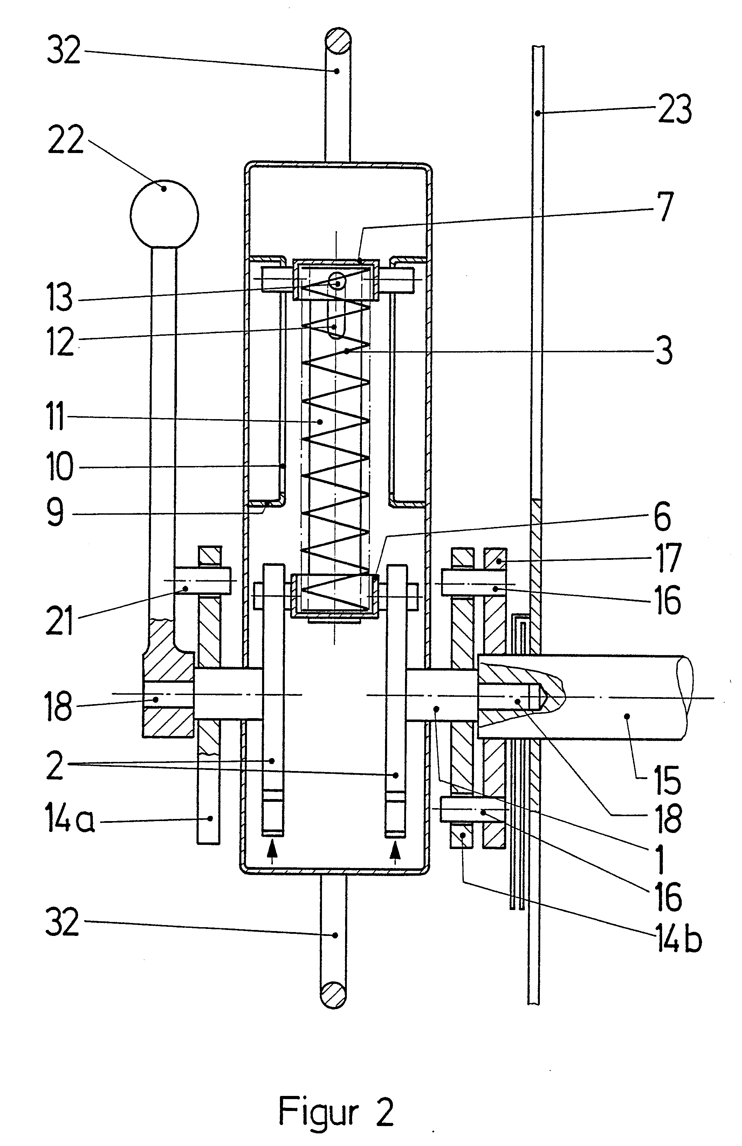

Der Universalantrieb ist in seiner Grundausführung als Sprungantrieb ausgelegt. Nach Fig. 1 und Fig. 2 ist im Inneren des Gehäuses 8 eine Antriebswelle 1 mit einer um 360 ° umlaufenden doppelarmigen Kurbel 2, sowie als Antriebsfeder eine Druckfeder 3 enthält. Die Druckfeder 3 stützt sich an zwei Widerlagern 6, 7 ab, von den das eine 6 an der Kurbel 2 angelenkt ist, während das andere 7 in den Langlöchern 10 der im Gehäuse 8 befestigten Rippen 9 geführt ist. Die Kurbel 2 ist an ihrem anderen Ende beispielsweise mit einer Erhebung 4 versehen, die zusammen mit im Gehäuse 8 befestigten federnden Bauteilen 5 zwei Raststellungen $R_1$ und $R_2$ für die Antriebswelle 1 bilden. Außerdem ist mit dem Widerlager 6 eine Lasche 11 verbunden, deren Langloch 12 mit dem am Widerlager 7 befestigten Zapfen 13 so zusammenwirkt, daß die Druckfeder 3 in den Raststellungen $R_1$ und $R_2$ auf ihre vorgespannte Länge begrenzt wird und durch Verkürzung des Abstandes zwischen den beiden Widerlagern 6, 7 für einen Schaltvorgang gespannt werden kann.

Die Antriebswelle 1 führt beidseitig aus dem Gehäuse 8 nach außen und ist jeweils durch eine gleichartige Kupplungsscheibe 14a/14b und einen Zapfen 18 abgeschlossen (Fig. 2). So wird auf der einen Seite der Antrieb mit der Schalterwelle 15 eines Dreistellungsschalters durch Aufstecken auf eine mit Kupplungsstiften 16 versehene Scheibe 17 zusammen mit einer Zentralführung durch den Zapfen 18 verbunden, während auf der anderen Seite der mit einem Mitnehmerstift 21 verbundene Schalthebel 22 zur Betätigung des Schalters auf den Zapfen 18 aufsteckbar ist.

Bei Ein-oder Ausschaltungen eines Lastschalters oder Erdungsschalters wird zunächst durch Drehung der Kurbel 2 die Druckfeder 3 auf dem Weg, beginnend bei $R_1$ bzw. $R_2$ zum Totpunkt $T_1$ gespannt und die so gespeicherte Energie beim Weiterdrehen zwischen $T_1$ und $R_2$ bzw. $R_1$ zum Bewegen der Schaltglieder benutzt. Das Widerlager 7 stützt sich dabei in der oberen Begrenzung des Langlochs 10 ab, während sich der Zapfen 13 in dem Langloch 12 relativ zur Lasche 11 verschiebt.

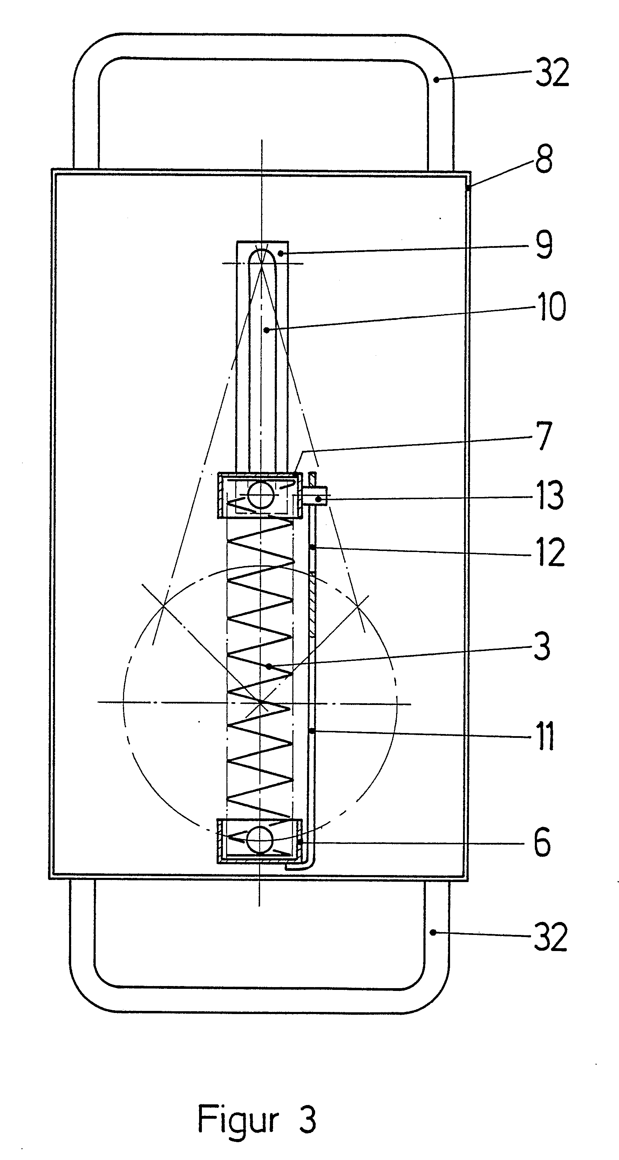

Zum Reversieren, d.h. zum Rückführen der Antriebswelle 1 aus beispielsweise der Raststellung R1 in die Raststellung R2 wird nach Fig. 3 die Antriebswelle 1 über den Totpunkt T2 gedreht, wobei die Druckfeder 3 ihre Vorspannlänge auf Grund der begrenzenden Wirkung der Lasche 11 beibehält und das obere Widerlager 7 der Druckfeder 3 eine hin-und hergehende Gleitbewegung im Langloch 10 ausführt. In Fig. 3 ist dabei der Mechanismus in der Totpunktstellung T2 dargestellt.

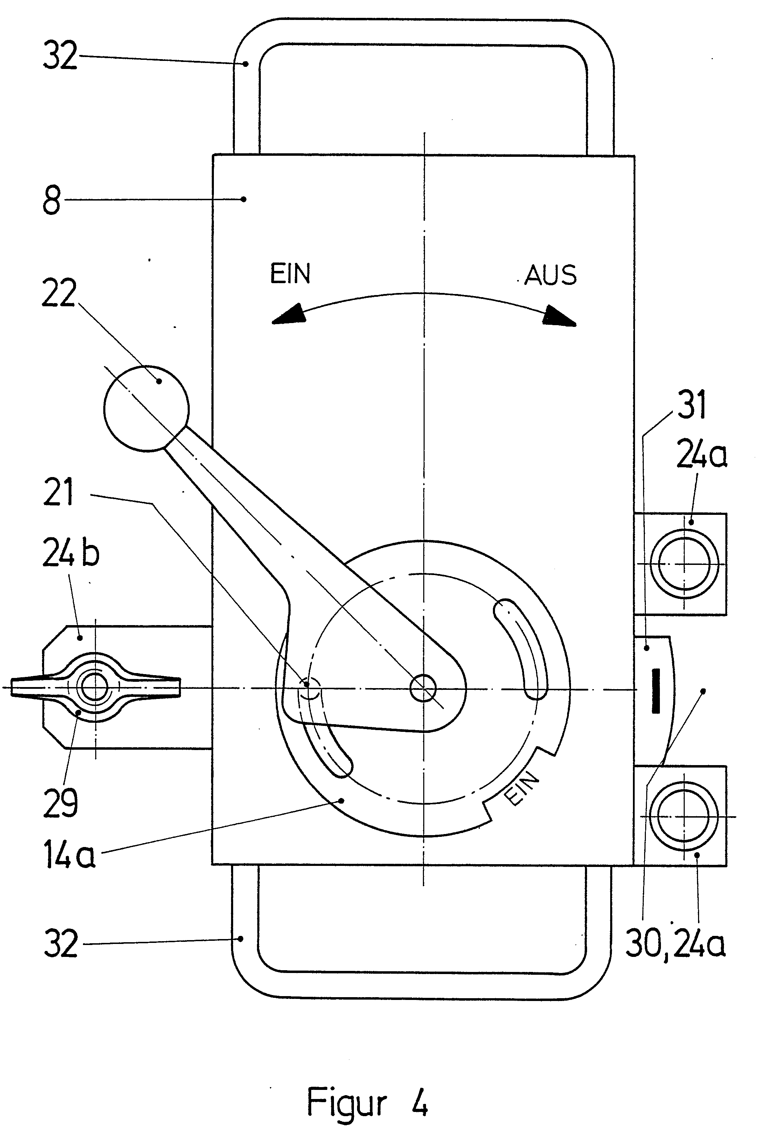

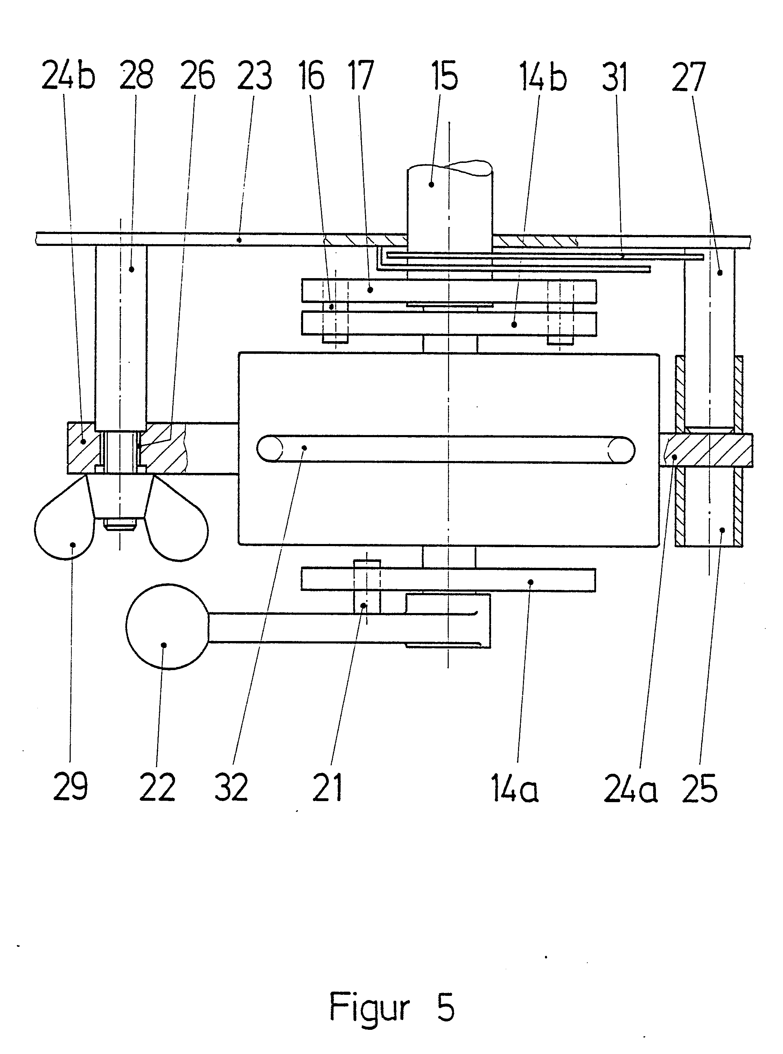

Um einen Schalter betätigen zu können, wird das Gehäuse 8 des Universalantriebs nach dem Aufsteckvorgang auf die Schalterwelle 15 an der Kapselung 23 der Schaltanlage lagesicher befestigt. Dazu sind nach Figur 4 und 5 an dem Gehäuse 8 beid seitig Befestigungslaschen 24a und 24b angebracht, die vorteilhafterweise bezogen auf dessen Tiefe in der Mittelebene, und symmetrisch zu der horizontalen Ebene durch die Wellenmittellinie liegen. In der in den Figuren 4 und 5 dargestellten Ausführung erkennt man auf der linken Seite des Gehäuses 8 eine mit einem Durchgangsloch 26 versehene Lasche 24b und auf der rechten Seite zwei beidseitig mit einem Sackloch 25 versehene Laschen 24a. Diese Befestigungslaschen 24a, 24b wirken mit an der Kapselung 23 der Schaltanlage festgemachten Gewindebolzen 28 bzw. Stehbolzen 27 zusammen, wobei die auf den Gewindebolzen 28 geschraubte Griffmutter 29 den Antrieb fixiert und vor dem ungewollten Abziehen bewahrt.

Die Befestigungslaschen 24a schließen zwischen sich ein Fenster 30 ein, in dem die an der Schalterwelle 15 befestigte Stellungsanzeige 31 des Schaltgerätes erkennbar ist.

Die eben beschriebene Befestigungsart ist als ein mögliches Ausführungsbeispiel anzusehen, andere Ausführungen sind im Rahmen der vorliegenden Erfindung ebenfalls möglich.

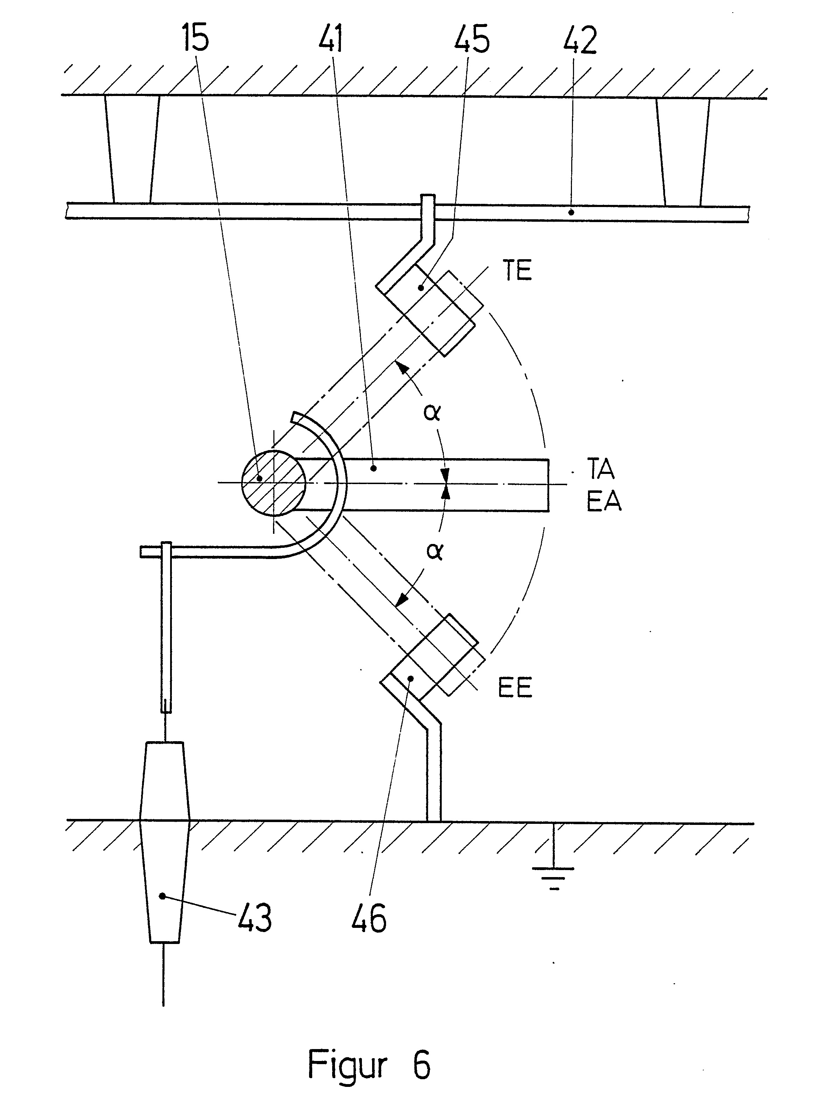

Bei den in vollisolierten, vorzugsweise mit einem Isoliergas, z.B. SF6 gefüllten Lastschaltanlagen 44 bevorzugt eingesetzten Dreistellungsschaltern, bei denen nach Fig. 6 die Schaltmesser 41 in der Stellung TE als eingeschalteter Lasttrennschalter die Sammelschiene 42 mit dem Abzweig 43 verbinden und in der Stellung TA gegenüber Sammelschiene 42 eine Trennstrecke herstellen, werden die Schaltmesser in einer dritten Stellung EE als Erdungsschalter zum Erden des Abgangs 43 benutzt. Die Stellung TA ist dabei mit EA (geöffneter Erdungsschalter) identisch. Die Schaltwinkel α der Schalterwelle 15 sind für beide Funktionen gleich groß, da zwischen einem ausgeschalteten Trennmesser 41 und jedem der Einschlagkontakte 45 oder 46 im Betrieb die gleiche Spannungsbeanspruchung auftritt.

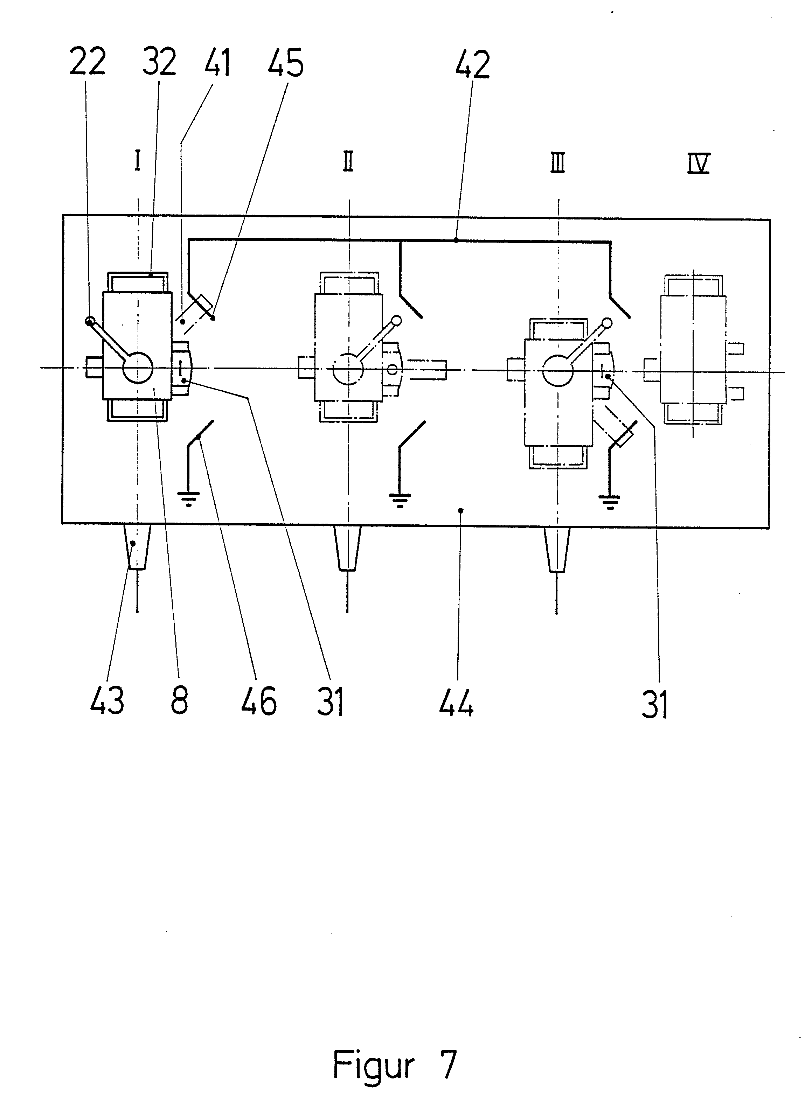

Ein Universalantrieb gemäß der vorliegenden Erfindung ist wahlweise für die Betätigung eines jeden Dreistellungsschalters einer Schaltanlage einsetzbar. Dies wird in Fig.7 am Beispiel einer dreifeldigen Lastschaltanlage 44 beschrieben. Der Schalter I ist eingeschaltet, der Universalantrieb in der Anbauart zur Betätigung als Lastschalter angebaut, wobei unter Hinweis auf Fig. 6 Schaltungen zwischen TE und TA und umgekehrt vorgenommen werden können. Für den Schalter II ist dabei die Trennstellung dargestellt. Soll ein in Trennstellung befindlicher Abzweig geerdet werden, so muß der Universalantrieb in der dafür vorgesehenen Anbauart angebaut werden, wie für Schalter III dargestellt.

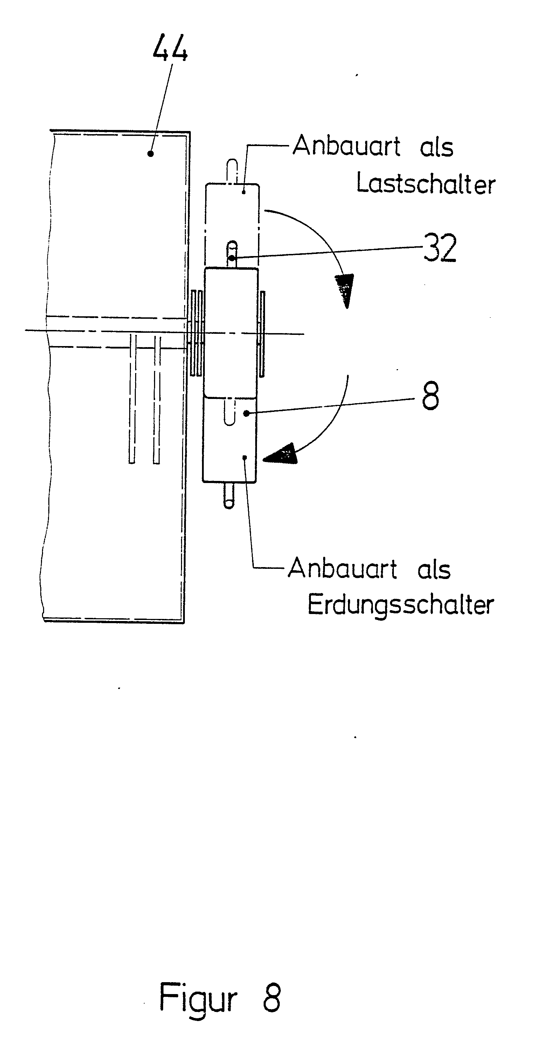

War der Antrieb vorher in der anderen Anbauart an denselben Schalter angebaut, so geschieht nach Fig. 8 die Umsetzung nach Lösen der Kupplung durch Drehung um 180 ° um eine horizontale, die Mittellinie der Antriebswelle schneidende Linie.

Eine Erdung in der Anbauart zur Betätigung als Lastschalter ist ebenso unmöglich, wie der Anbau des Universalantriebs in der zur Betätigung als Erdungsschalter vorgesehenen Art an einen Schalter, der in Stellung EIN (TE) steht. Dasselbe gilt natürlich zur Verhinderung von Einschaltungen bei den umgekehrten Anbauarten. Der erfindungsgemäße Universalantrieb ist somit so konzipiert, daß fehlerhaftes, unbeabsichtigtes Einschalten oder Erden eines Abzweigs mit der daraus entstehenden Betriebsstörung sicher vermieden wird, ohne daß dazu zusätzliche Verriegelungen erforderlich sind. Die Bedienungssicherheit läßt sich vorschlagsgemäß noch dadurch erhöhen, daß die jeweiligen Frontseiten des Universalantriebs in den beiden Anbauarten unterschiedlich beschriftet und/oder farblich gekennzeichnet sein können.

Soll nacheinander an zwei Schaltern dieselbe Schalthandlung, z.B. eine Ausschaltung des Lastschalters (TE———TA), durchgeführt werden, so muß der Universalantrieb vor dem Anstecken an den zweiten Schalter, wie bereits beschrieben, reversiert werden.

Dazu besteht die Möglichkeit an einem Ende der Schaltanlage 44 eine zusätzliche Position IV für den Antrieb, ohne Kupplung an eine Schalterwelle, vorzusehen.

Da zum Verdrehen der Antriebswelle 1 beim Reversieren im wesentlichen nur die Rastkräfte der Stellungen $R_1$ und $R_2$ zu überwinden sind, kann dieser Vorgang auch bei abgezogenem Antrieb oder in einer der Stellungen I, II oder III nach Fig. 7, bei gelockerter Befestigung und soweit vorgezogenem Antrieb, daß die Kupplung zwischen Antriebswelle 1 und Schalterwelle 15 aufgehoben ist, durchgeführt werden.

Die Handgriffe 32 dienen zur leichteren Handhabung der Antriebe beim Umsetzen von einem Schalter zum anderen.

In Fig. 7 sind außerdem die Anzeigen 31 für die verschiedenen Schalterstellungen, jeweils an der rechten Antriebsseite zwischen den beiden Befestigungslaschen 24a, zu erkennen.

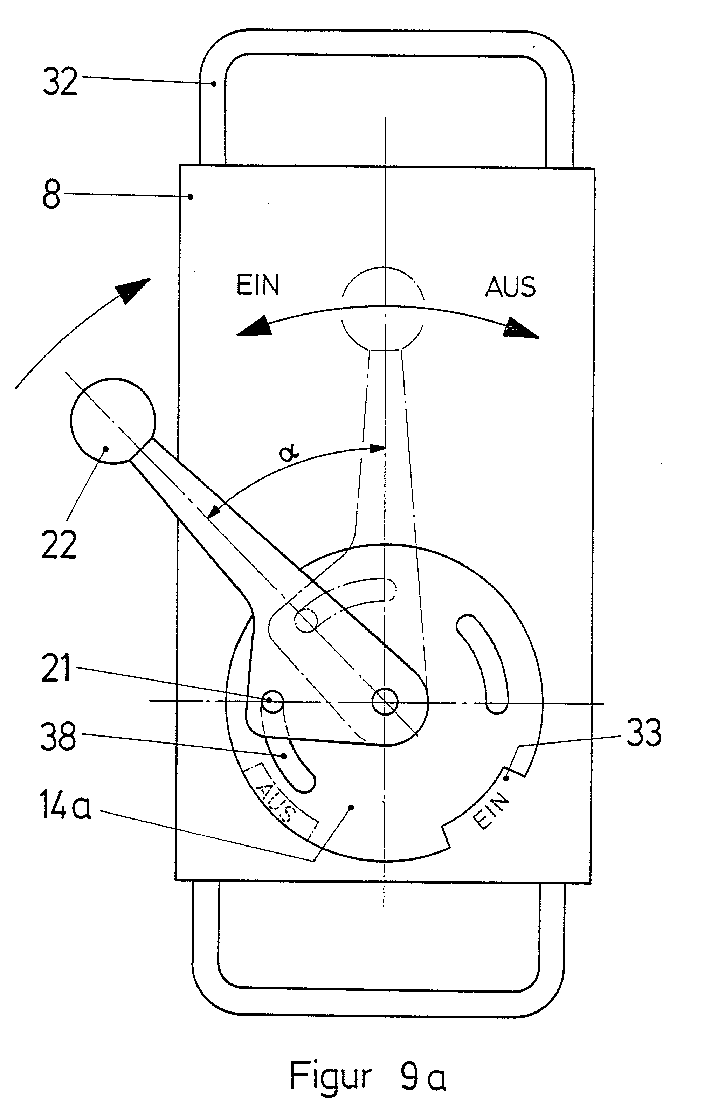

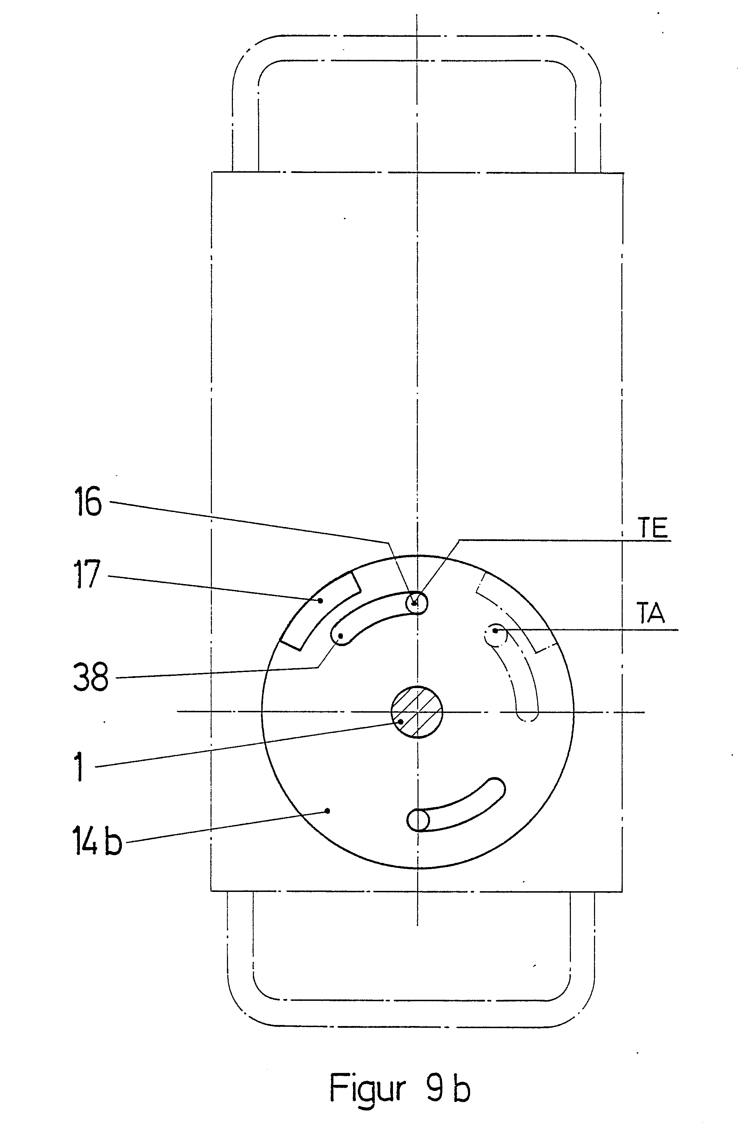

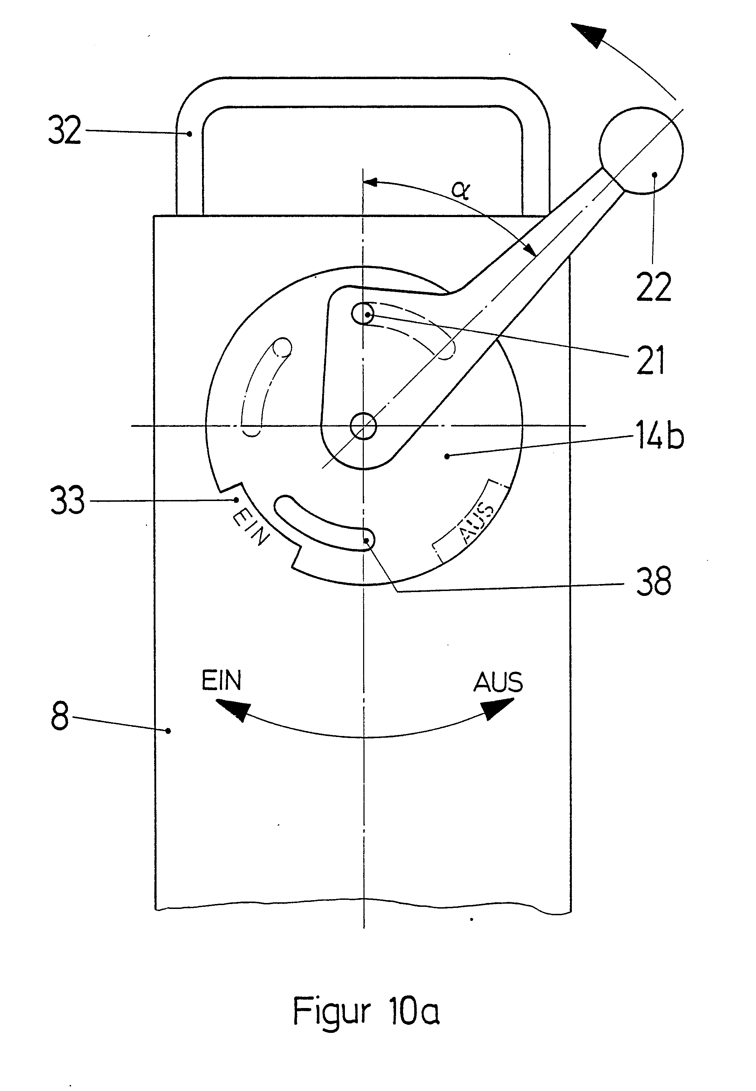

Zur Betätigung des Universalantriebs dient ein Schalthebel 22, der von der Bedienungsseite aufgesteckt wird (Fig.9a, 10a).Für die Ausschaltung als Lastschalter wird in Fig.9a eine Drehung des Schalthebels 22 im Uhrzeigersinn um den Schaltwinkel α vorgenommen, wobei in bereits beschriebener Weise durch Mitnahme der Kupplungsscheibe 14a die Druckfeder 3 bis zum Totpunkt $T_i$ gespannt wird. Beim Weiterdrehen wird die in der Druckfeder 3 gespeicherte Energie in die Bewegung des Lastschalters aus der Stellung EIN in die Stellung AUS umgesetzt. Langlöcher 38 in beiden Kupplungsscheiben 14a und 14b Antriebs sind dabei so ausgebildet, daß die Bewegung des Lastschalters erst nach Überschreiten des Totpunkts $T_i$ durch Mitnahme der Kupplungsstifte 16 erfolgt (Fig.9b), während der Schalthebel 22 durch den in Langloch 38 der Kupplungsscheibe 14a gegebenen Freilauf für den Mitnehmerstift 21 entkuppelt ist (Fig. 9a). Dadurch wird ein Mitreißen des Schalthebels 22 und eine dadurch entstehende Verletzungsgefahr für die bedienende Person sicher verhindert.

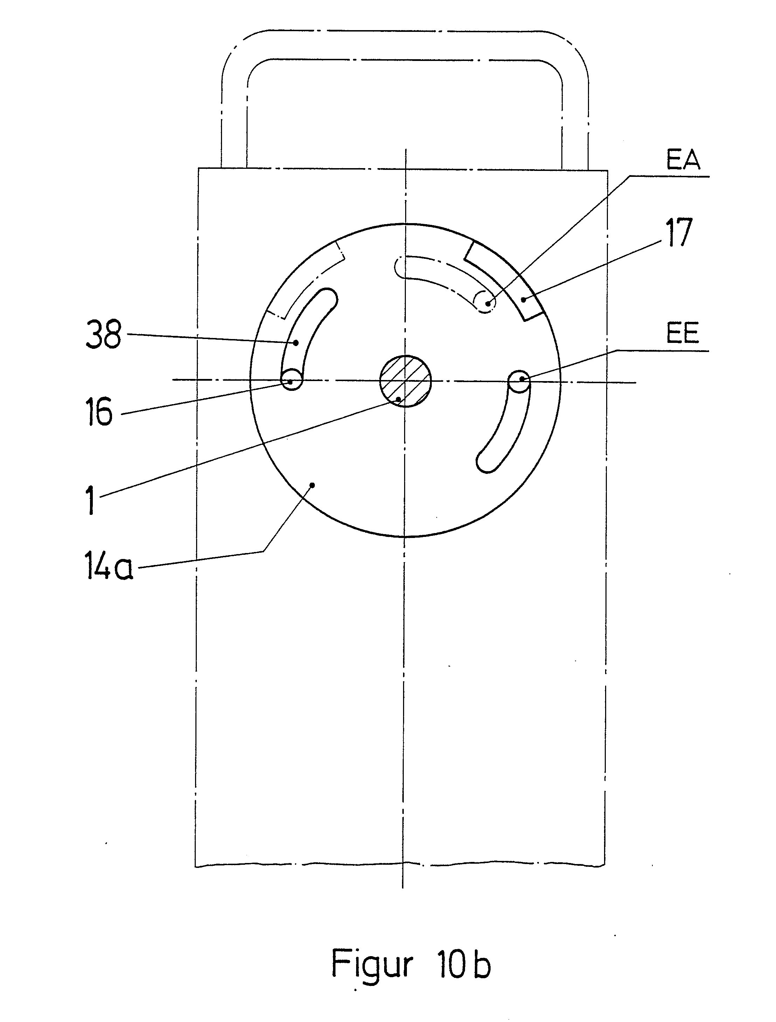

Für die Ausschaltung als Erdungsschalter wird in Fig. 10a eine Drehung des Schalthebels 22 im Gegenuhrzeigersinn vorgenommen. Der weitere Ablauf in Antrieb und Dreistellungsschalter verläuft analog, wie vorab für die Lastschalterfunktion beschrieben. Auf Fig. 9b und 10b sind außerdem zum besseren Verständnis die 3 Stellungen der mit der Schalterwelle verbundenen Kupplungsstifte 16 mit den in Fig. 6 verwendeten Kurzzeichen angegeben.

In den Figuren 9a, b, und 10a, b ist zu erkennen, daß der Schalthebel 22 zwischen Hebelachse und Mitnehmerstift 21 einen Winkel aufweist, der dem des Schaltwinkels $\alpha$ entspricht. In der Anbauart für Lastschalter findet die Betätigung im linken Sektor und in der Anbauart für Erdungsschalter im rechten Sektor ausgehend von der vertikalen Mittellinie statt. Bei jeder Schalthandlung legt die Antriebswelle 1 den doppelten Schaltwinkel $2\alpha$ zurück. In den Kupplungsscheiben 14a und 14b sind Ausschnitte für die Anzeigeschilder 33 der Antriebsstellung vorgesehen. Siehe auch Fig. 2.

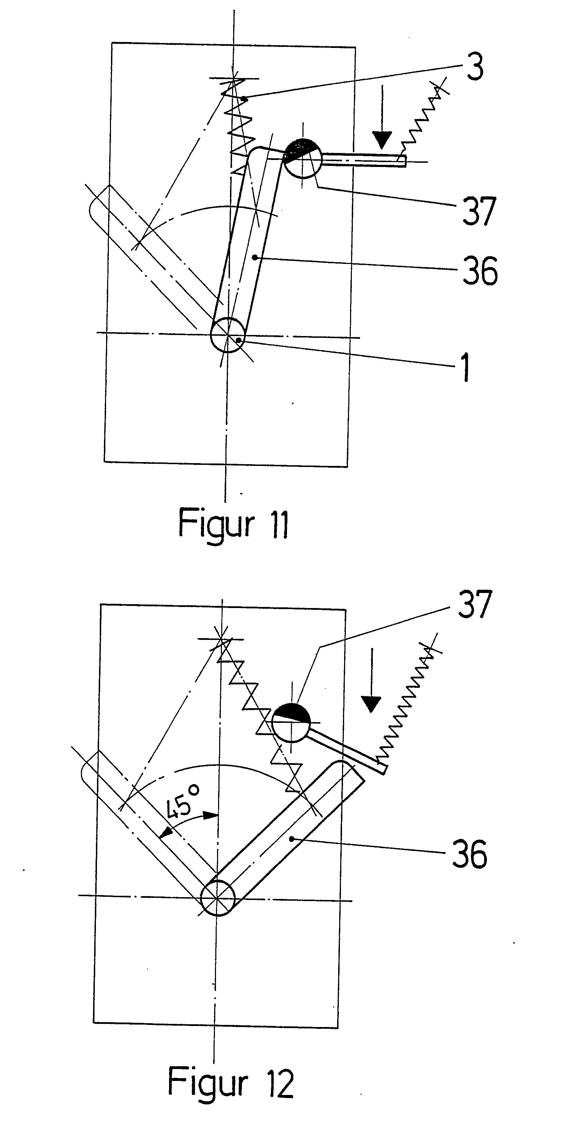

Das vorgeschlagene Antriebsprinzip eignet sich auch für die Anbringung einer Auslösevorrichtung für Fernsteuerung. Diese wird zum Beispiel benötigt, um eine selbsttätige 3-polige Ausschaltung eines Lastschalters nach dem Durchschmelzen einer Sicherung in einem Transformator-Abzweig zu ermöglichen. Die dazu erforderliche Erweiterung des Antriebs ist in Fig. 11 und Fig. 12 schematisch dargestellt. Sie besteht aus einem Abstützhebel 36, der mit der Antriebswelle 1 verbunden ist, und einem Sperrglied, das in unserem Fall als Auslösewelle 37 ausgebildet ist. Die als Antriebsfeder wirkende Druckfeder 3 ist ebenfalls schematisch angedeutet. Vor einem Ausschaltvorgang wird die Druckfeder 3 durch Drehung der Antriebswelle 1 im Uhrzeigersinn mittels des Schalthebels 22 in gewohnter Weise gespannt und unmittelbar nach Durchlaufen des Totpunkts $T_1$ - (Fig.11) über den Abstützhebel 36 an der Auslösewelle 37 abgefangen. Der Schalthebel wird abgezogen, der Schalter ist nun zu jedem Zeitpunkt in der Lage, eine Ausschaltung auszuführen. Eine Drehung der Auslösewelle 37 im Uhrzeigersinn durch ein nicht dargestelltes Auslöseorgan, z.B. einen Magnetauslöser führt dann zur Entsperrung des Abstützhebels 36 und zu einer Ausschaltung des Schalters.

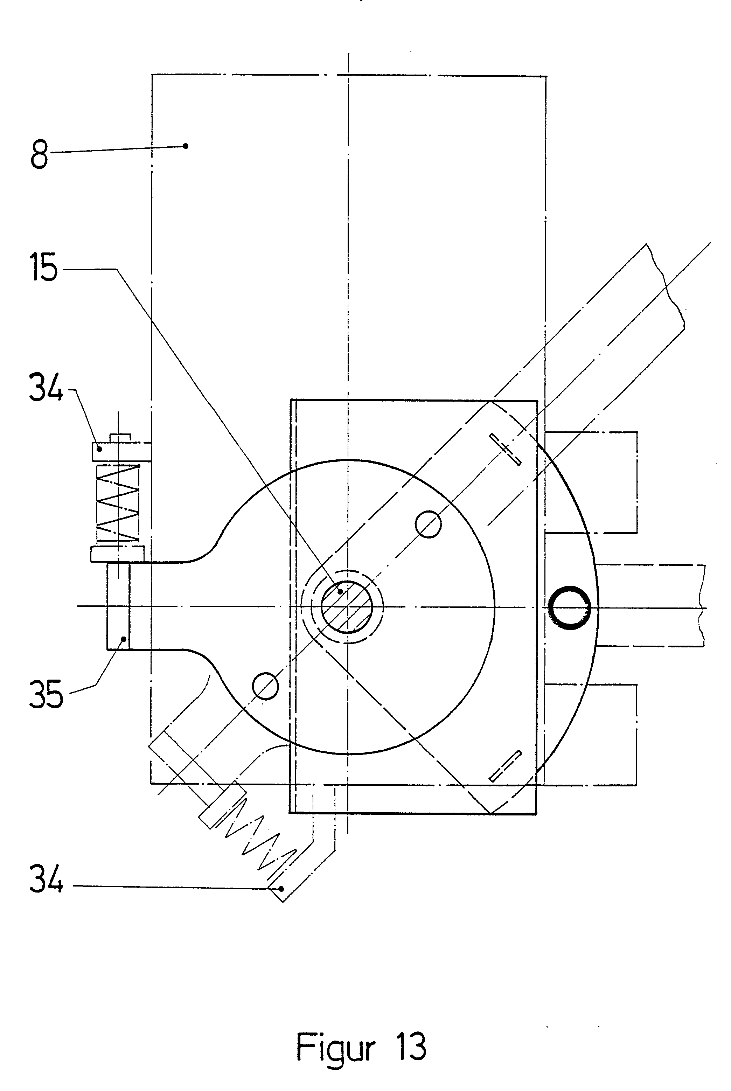

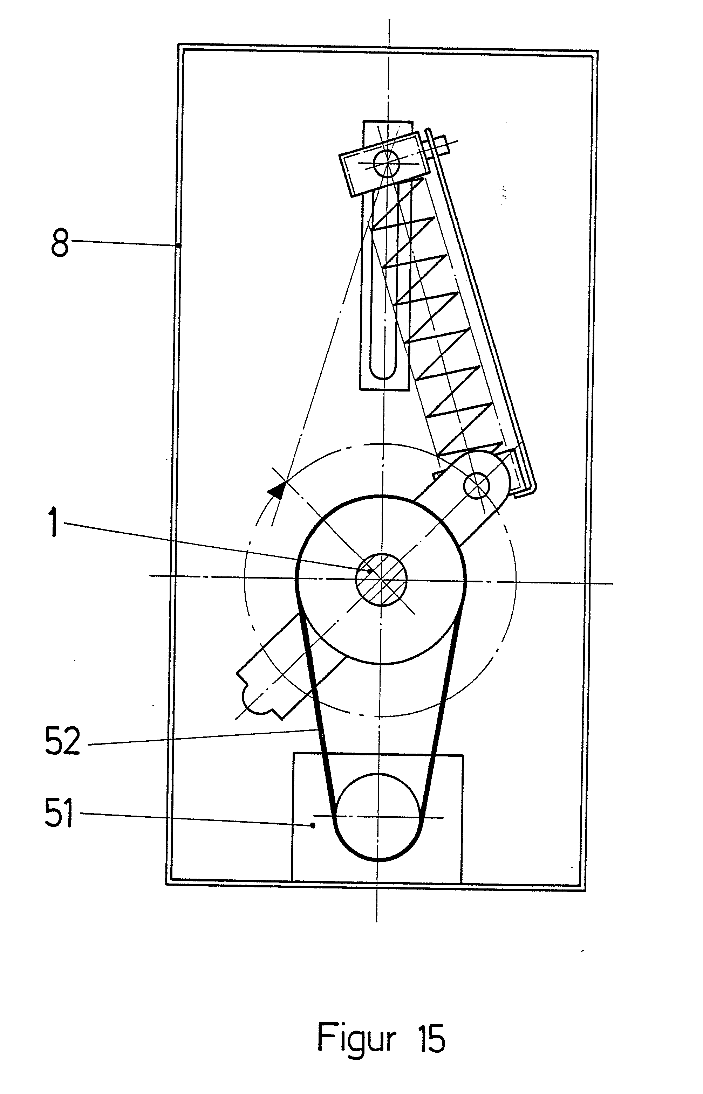

Der vorgeschlagene Antrieb gestattet auch eine Ausrüstung mit einem Anschlagsystem, das aus Fig. 13 und Fig. 14 zu erkennen ist. Dazu sind am Gehäuse 8 elastische Anschläge 34 befestigt, die mit einem an der Schalterwelle 15 angebrachtem Anschlaghebel 35 zusammenwirken. Der Anschlaghebel 35 kann dabei als Verlängerung der Scheibe 17 ausgeführt sein und vorteilhaft die Kupplungsscheibe 14b übergreifen.Die Anschläge 34 sind beidseitig am Gehäuse 8 vorgesehen, damit sie mit dem Anschlaghebel 35 nicht nur in der gezeichneten Antriebsart für Lastschalter, sondern auch in der für Erdungsschalter wirken können.

In Fig. 13 ist der Antriebshebel 35 in durchgezogenen Strichen in der Stellung TA und strichpunktiert in TE gezeigt.

Das vorgeschlagene Antriebsprinzip kann auch in fernsteuerbaren Anlagen eingesetzt werden, wobei die Antriebsausführung für die Lastschalter nach Figur 15 mit einem Getriebemotor 51 ausgerüstet ist. Dazu kann das Gehäuse 8 so weit vergrößert werden, daß der Motor mit darin Platz findet. Die Bewegungsübertragung kann z.B. über einen Keil-oder Zahnriementrieb 52 auf die Antriebswelle 1 erfolgen. Es ist aber auch möglich, den Getriebemotor und den Riementrieb außen an das geschlossene Gehäuse anzubauen. Derartige Spanngetriebe und ihre Steuerungen sind von konventionellen Schalterantrieben bekannt und werden daher hier nicht ausführlich beschrieben.

Liste der Bezugszeichen

| | |
|---|---|
| 1 | Antriebswelle |
| 2 | Kurbel |
| 3 | Druckfeder |
| 4 | Erhebung |
| $R_1$, $R_2$ | Raststellungen |
| $T_1$, $T_2$ | Totpunkte |
| 5 | Federndes Bauteil |
| 6 | Widerlager |
| 7 | Widerlager |
| 8 | Gehäuse |
| 9 | Rippe |
| 10 | Langloch |
| 11 | Lasche |
| 12 | Langloch |
| 13 | Zapfen |
| 14a, b | Kupplungsscheiben |
| 15 | Schalterwelle |
| 16 | Kupplungsstift |
| 17 | Scheibe |
| 18 | Zapfen |
| 21 | Mitnehmerstift |
| 22 | Schalthebel |
| 23 | Kapselung |
| 24a, 24b | Befestigungslaschen |
| 25 | Sackloch |
| 26 | Durchgangsloch |
| 27 | Stehbolzen |

28 Gewindebolzen
29 Griffmutter
30 Fenster
31 Stellungsanzeige (Schalter)
32 Handgriff
33 Anzeigeschilder
34 Anschlag
35 Anschlaghebel
36 Abstützhebel
37 Auslösewelle
38 Langloch
41 Schaltmesser
42 Sammelschiene
43 Abgang
44 Lastschaltanlage
45 Einschlagkontakt an Sammelschiene
46 Einschlagkontakt an Erdungsseite
$\alpha$ Schaltwinkel
51 Getriebemotor
52 Zahn-oder Keilriementrieb

## Ansprüche

1. Universalantrieb insbesondere für in gekapselte Lastschaltanlagen eingebaute Schaltgeräte mit einer wahlweise in beiden Drehrichtungen durch eine Drehbewegung spannbaren und anschließend eine Antriebswelle für eine Ein-oder Ausschaltung von einer Stellung in eine zweite drehenden Antriebsfeder, der als getrenntes Gerät ausgebildet und beidseitig mit Mitteln zum Anbau an jeden Schalter der Schaltanlage ausgerüstet ist,
**dadurch gekennzeichnet, daß**
- der Antrieb zum Anbau an einen Dreistellungsschalter ausgebildet ist,
- der Antrieb Kupplungsmittel aufweist, mit denen er auf der einen Seite zur Betätigung als Lastschalter und auf der anderen Seite zur Betätigung als Erdungsschalter an den Dreistellungsschalter anbaubar ist,
- das allseitig geschlossene Gehäuse (8) des Antriebs mit der Kapselung (23) des zu betätigenden Dreistellungsschalters fest verbindbar ist, und
- die Antriebsfeder durch einen auf der dem Dreistellungsschalter jeweils abgekehrten Seite der Antriebswelle (1) aufsteckbaren Schalthebel (22) spannbar ist.

2. Universalantrieb nach Anspruch 1,
**dadurch gekennzeichnet,**
daß die Antriebswelle (1) um 360 ° drehbar ist und Mittel vorgesehen sind, die die Drehbewegung in zwei durch winkelversetzte Raststellungen ($R_1$, $R_2$) bestimmte Sektoren unterteilt, wobei der Drehbewegung in dem ersten Sektor ($R_1$-$T_1$-$R_2$) das Spannen der Antriebsfeder und das Ein-oder Ausschalten des Schalters und der Drehbewegung in dem zweiten Sektor ($R_1$-$T_2$-$R_2$) bei nicht mit dem Schalter verbundenem Antrieb eine Rückführung der Antriebsfeder von einer Raststellung ($R_1$ oder $R_2$) in die andere zugeordnet ist.

3. Universalantrieb nach Anspruch 2,
**dadurch gekennzeichnet,**
daß die Antriebsfeder in beiden Raststellung ($R_1$, $R_2$) die gleiche Vorspannlänge aufweist, wobei das eine Federende schwenkbar an einer Kurbel (2) der Antriebswelle (1) angelenkt ist, während das andere Federende in einer vorzugsweise zum Drehmittelpunkt der Antriebswelle (1) gerichteten Geradführung (9) so geführt ist, daß es sich bei einer Drehbewegung im ersten Sektor an deren Begrenzung abstützt und im zweiten Sektor in ihr transversal verschiebt.

4. Universalantrieb nach Anspruch 1,
**dadurch gekennzeichnet,**
daß der Schalthebel (22) während der Drehung der Schalterwelle (15) nicht mit der Antriebsfeder gekuppelt ist.

5. Universalantrieb nach Anspruch 3,
**dadurch gekennzeichnet,**
daß an den beiden Innenseiten des Gehäuses (8) angebrachte Langlöcher (10) die Geradführung bewirken und daß als Antriebsfeder eine Druckfeder (3) eingesetzt ist, deren Federenden durch Mittel verbunden sind, die die Druckfeder (3) auf Vorspannung hält.

6. Universalantrieb nach Anspruch 5,
**dadurch gekennzeichnet,**
daß die Federenden an Widerlagern (6, 7) abgestützt sind und daß als Mittel eine Lasche (11) außerhalb der Druckfeder (3) angeordnet ist, die mit dem einen Widerlager (6) der Druckfeder (3) fest verbunden und mit einem am anderen Widerlager (7) befestigten Zapfen (13) mittels eines Langloches (12) zusammenwirkt.

7. Universalantrieb nach den Ansprüchen 1 bis 4,
**dadurch gekennzeichnet,**
daß die Antriebswelle (1) als Kupplungsmittel beidseitig durch je eine Kupplungsscheibe (14a, 14b) und eine Zentrierung, beispielsweise einen Zapfen (18) begrenzt ist, wobei jede Kupplungsscheibe (14a, 14b) mindestens ein, vorzugsweise zwei konzentrisch angeordnete kreisbogenförmige Langlöcher (38) aufweist, deren Länge in etwa dem zum Spannen der Antriebsfeder erforderlichen Drehwinkel entspricht und die jeweils mit einem Kupplungsstift (16) der Schalterwelle (15) bzw. Mitnehmerstift (21) des Schalthebels (22) zusammenwirken.

8. Universalantrieb nach Anspruch 7,
**dadurch gekennzeichnet,**
daß die Kupplungsscheiben (14a, 14b) Ausschnitte (33) aufweisen, die in Verbindung mit auf dem Gehäuse (8) angebrachten Anzeigeschildern (33) die jeweilige Stellung des Antriebs angeben.

9. Universalantrieb nach Anspruch 1,

**dadurch gekennzeichnet,**

daß jede der beiden Seiten des Antriebs jeweils an denselben Festpunkten der Kapselung (23) des Schalters durch Verschraubung und/oder Aufstecken befestigbar ist.

10. Universalantrieb nach Anspruch 9, **dadurch gekennzeichnet,**

daß an den Außenseiten des Gehäuses (8) mittig zu dessen Tiefe links und rechts der Antriebswelle (1) wenigstens je eine Befestigungslasche (24a, 24b) mit einem Durchgangsloch (26) für einen Gewindebolzen (28) oder beidseitig je einem Sackloch (25) zur Aufnahme eines Stehbolzens (27) vorgesehen ist.

11. Universalantrieb nach Anspruch 10,

**dadurch gekennzeichnet,**

daß an einer Außenseite die Befestigungslaschen (24a) so angeordnet sind, daß sie ein seitlich offenes Fenster (30) zur Beobachtung der Stellungsanzeige (31) des Dreistellungsschalters bilden.

12. Universalantrieb nach Anspruch 1,

**dadurch gekennzeichnet,**

daß beide Seiten des Gehäuses (8) unterschiedlich beschriftet und/oder unterschiedlich farblich gekennzeichnet sind.

13. Universalantrieb nach Anspruch 1,

**dadurch gekennzeichnet,**

daß ein mit der Antriebswelle (1) verbundener Abstützhebel (36) bei gespannter Antriebsfeder an einer im Gehäuse (8) gelagerten, als Sperrglied wirkenden, gegen die Kraft einer Rückzugsfeder mittels eines elektrischen oder mechanischen Impulses drehbaren Auslösewelle (37) anliegt.

14. Universalantrieb nach Anspruch 1,

**dadurch gekennzeichnet,**

daß zum Spannen der Antriebsfeder ein innerhalb oder außerhalb vom Gehäuse anbaubarer Getriebemotor (51) mit Steuerkontakten vorgesehen ist.

15. Universalantrieb nach den Ansprüchen 1 und 14,

**dadurch gekennzeichnet,**

daß die Verbindung zwischen der Antriebswelle (1) und dem Getriebemotor (51) aus einem Zahn-oder Keilriementrieb (52) besteht.

16. Universalantrieb nach Anspruch 1 bis 15,

**dadurch gekennzeichnet,**

daß an dem Gehäuse (8) elastische, einstellbare Anschläge (34) zur Begrenzung des Drehwinkels der Schalterwelle (15) vorgesehen sind.

17. Universalantrieb nach den Ansprüchen 1 und 4,

**dadurch gekennzeichnet,**

daß die Nabe des Schalthebels (22) die Antriebswelle (1) abdeckt.

Figur 1

Figur 2

Figur 3

Figur 4

0 279 045

Figur 5

Figur 6

Figur 7

44

Anbauart als
Lastschalter

32

8

Anbauart als
Erdungsschalter

Figur 8

EIN    AUS

α

**Figur 9a**

Figur 9 b

0 279 045

Figur 10a

Figur 10 b

Figur 11

Figur 12

8

15

34

35

34

Figur 13

Figur 15